Europäisches Patentamt

(19) European Patent Office

Office européen des brevets

(11) Numéro de publication : **0 156 689**
**B1**

(12) FASCICULE DE BREVET EUROPÉEN

(45) Date de publication du fascicule du brevet :
28.09.88

(21) Numéro de dépôt : 85400346.4

(22) Date de dépôt : 25.02.85

(51) Int. Cl.⁴ : **G 21 C 1/02**, G 21 C 13/02

(54) Réacteur nucléaire à neutrons rapides comprenant une cuve principale et une dalle de fermeture suspendues.

(30) Priorité : 02.03.84 FR 8403303

(43) Date de publication de la demande :
02.10.85 Bulletin 85/40

(45) Mention de la délivrance du brevet :
28.09.88 Bulletin 88/39

(84) Etats contractants désignés :
BE DE GB IT

(56) Documents cités :
EP-A- 0 055 643
FR-A- 2 283 517
FR-A- 2 283 519
FR-A- 2 319 073
US-A- 3 926 722
US-A- 4 326 920
ATOMKERNENERGIE, vol. 30, no. 4, 1977, pages 238-243, Munich, DE; F.R. MYNATT: "Shielding methods development in the United States"

(73) Titulaire : COMMISSARIAT A L'ENERGIE ATOMIQUE
31/33, rue de la Fédération
F-75015 Paris (FR)

(72) Inventeur : Lemercier, Guy
67, Avenue de la Bourgade
F-13610 Le Puy Sainte Reparade (FR)

(74) Mandataire : Mongrédien, André et al
c/o BREVATOME 25, rue de Ponthieu
F-75008 Paris (FR)

## Description

La présente invention se rapporte à un réacteur nucléaire. à neutrons rapides du type dans lequel le cœur du réacteur est logé dans une cuve dite cuve principale remplie de métal liquide et obturée par une dalle de fermeture.

De façon plus précise, l'invention concerne, dans un tel réacteur, le supportage de la cuve principale et de sa dalle de fermeture par la partie supérieure du puits de cuve formé dans l'enceinte de béton pour recevoir la cuve principale.

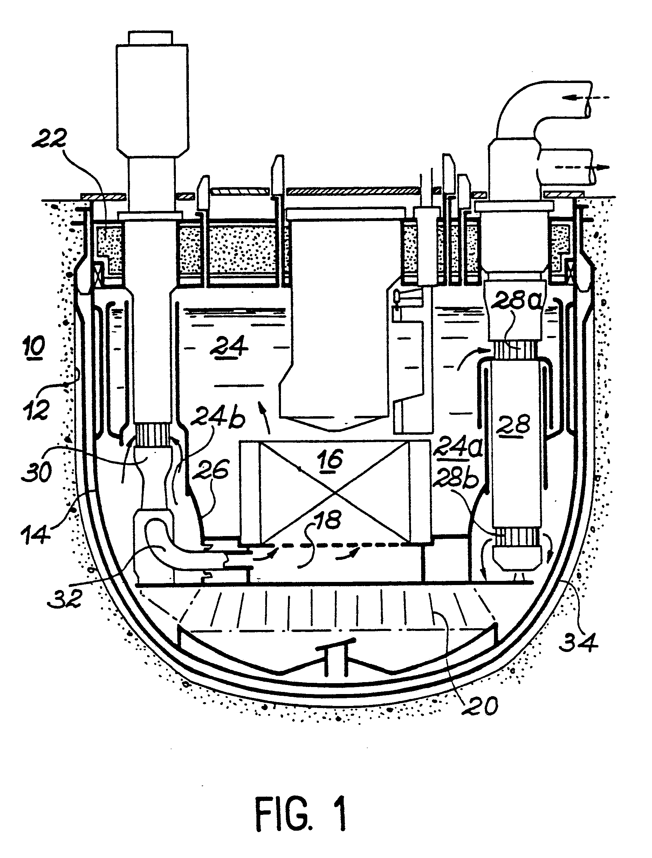

La figure 1 est une vue schématique en coupe transversale, d'un réacteur à neutrons rapides de type intégré et de conception classique.

On reconnaît sur cette figure l'enceinte de béton 10 définissant le puits de cuve 12 à la partie supérieure duquel est pendue la cuve principale 14 contenant le cœur 16 du réacteur. Le cœur 16 repose sur un sommier d'alimentation 18, qui repose lui-même sur le fond de la cuve 14 par l'intermédiaire d'un platelage 20.

La cuve principale 14 est obturée à son extrémité supérieure par une dalle de fermeture 22 et elle contient l'ensemble du métal liquide primaire 24, généralement constitué par du sodium.

Une cuve interne 26 sépare en deux volumes distincts le sodium 24 contenu dans la cuve 14. La cuve interne 26 définit ainsi, respectivement, un collecteur chaud 24a et un collecteur froid 24b.

La dalle 22 supporte, dans sa partie périphérique, un certain nombre d'échangeurs de chaleur 28 et de pompes 30. Sous l'action des pompes 30, le sodium chaud sortant du cœur 16 du réacteur traverse le collecteur chaud 24a avant de pénétrer par des orifices d'entrée 28a dans chacun des échangeurs 28. La chaleur véhiculée par le fluide primaire est alors transmise au fluide secondaire. Le sodium primaire refroidi ressort des échangeurs par des orifices de sortie 28b débouchant dans le collecteur froid 24b. Il est alors repris par les pompes 30, pour être refoulé dans le sommier 18 d'alimentation du cœur 16 par des conduites 32.

Généralement, la cuve principale 14 est doublée par une cuve de sécurité 34 également suspendue à la partie supérieure du puits de cuve.

Les réacteurs nucléaires à neutrons rapides du type « à boucles » se distinguent des réacteurs nucléaires à neutrons rapides du type intégré par le fait que les échangeurs et, éventuellement, les pompes ne sont plus situés à l'intérieur de la cuve principale, mais en dehors de celle-ci. Le fonctionnement du réacteur et les problèmes liés au supportage de la cuve et de la dalle sont par ailleurs identiques. Par conséquent, l'invention s'applique indifféremment aux réacteurs à neutrons rapides de type intégré et de type à boucles.

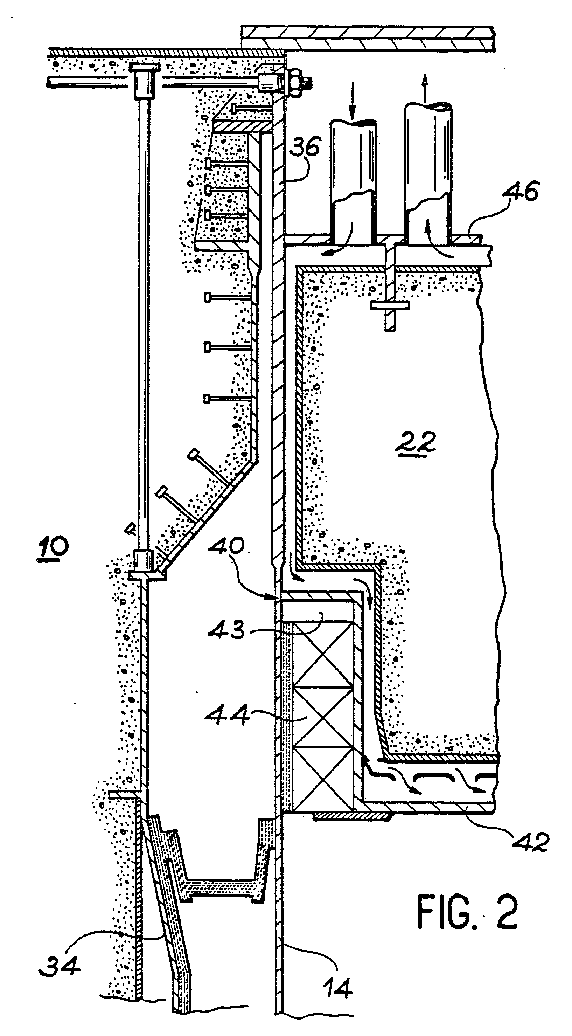

Sur la figure 2, on a représenté à plus grande échelle et plus en détail le supportage des cuves 14 et 34 et de la dalle 22 par la partie supérieure du puits de cuve, dans le réacteur de la figure 1.

On voit clairement sur cette figure que la cuve principale 14 et la dalle de fermeture 22 sont suspendues à la partie supérieure du puits de cuve par une virole de supportage commune 36 constituant à la fois la virole externe de la dalle et la partie supérieure ou « attente » de la cuve principale 14.

Dans cette configuration, le point d'accrochage 40 de la semelle inférieure 42 de la dalle sur l'attente de la cuve 14 doit être placé à une certaine distance au-dessus de l'atmosphère interne de gaz neutre qui règne au-dessus du niveau libre du sodium de la cuve principale 14 et être isolé thermiquement par rapport à cette atmosphère. En effet, si une telle précaution n'était pas prise, l'attente de la cuve principale serait soumise à des sollicitations thermiques inadmissibles résultant de la différence de températures importante existant entre la dalle 22, refroidie par une circulation de fluide représentée schématiquement par des flèches sur la figure 2, et l'atmosphère interne de gaz neutre de la cuve 14. A cet effet, on voit sur la figure 2 qu'il est d'usage de réaliser la dalle 22 de telle sorte qu'elle présente une partie en saillie vers le bas par rapport à son point d'accrochage 40 sur la cuve. On définit ainsi entre la cuve 14 et la semelle inférieure 42 de la dalle une zone annulaire 43 dans laquelle est placé un matériau calorifuge 44.

Par ailleurs, on sait que l'épaisseur de la dalle 22 est déterminée, notamment en ce qui concerne son remplissage de béton, par un compromis entre sa fonction de protection neutronique et les critères liés à sa tenue mécanique et à son coût.

En pratique, on voit sur la figure 2 que ce compromis conduit, selon la technique antérieure, à placer la semelle supérieure 46 de la dalle 22 à un niveau inférieur par rapport à celui de la face supérieure de l'enceinte de béton 10. Ainsi, pour un dimensionnement donné du bloc réacteur, si l'épaisseur de la dalle est d'environ 2 700 mm, ce décalage atteint environ 850 mm.

En raison de cet abaissement du niveau supérieur de la dalle par rapport à l'enceinte de béton qui l'entoure, toute fuite de sodium intervenant au niveau de la traversée de la dalle risque de conduire à un feu de sodium en nappe sur celle-ci. Les conséquences d'un tel feu pouvant être relativement graves, il est donc nécessaire dans les structures existantes de prévoir à ce niveau des éléments de protection tels qu'un ou plusieurs bacs de rétention de sodium.

De plus, le décalage vers le bas de la dalle 22 par rapport à la face supérieure de l'enceinte de béton 10 augmente d'autant les dimensions verticales de certains des composants du réacteur. En particulier, les hauteurs de l'enceinte de béton 10, de la cuve de sécurité 34 et de son calorifuge, sont accrues par ce décalage. D'autres composants tels que les échangeurs et le sas de manutention ont également, de ce fait, une hauteur accrue au niveau de la traversée de la dalle. Le coût du réacteur s'en trouve donc pénalisé.

La présente invention a précisément pour objet un réacteur nucléaire à neutrons rapides dans lequel la cuve principale et sa dalle de fermeture sont suspendues séparément au puits de cuve. On supprime ainsi tout décalage entre la face supérieure de la dalle et la face supérieure de l'enceinte de béton entourant celle-ci. Tout risque de feu de sodium en nappe sur la dalle se trouve donc évité sans qu'il soit nécessaire d'avoir recours à des moyens annexes coûteux. De plus, la hauteur d'un certain nombre des composants du réacteur se trouve réduite de la hauteur du décalage de la dalle par rapport à la face supérieure de l'enceinte de béton soit, dans l'exemple cité précédemment, d'environ 850 mm, ce qui conduit à une diminution substantielle du coût du réacteur.

A cet effet, il est proposé conformément à l'invention un réacteur nucléaire à neutrons rapides comprenant une cuve principale remplie de métal liquide et contenant le cœur du réacteur, une dalle de fermeture obturant la cuve et une enceinte de béton définissant un puits de cuve dans lequel sont logées et suspendues la cuve principale et sa dalle de fermeture, la dalle et la cuve principale étant suspendues directement à la partie supérieure du puits de cuve par des moyens de supportage, caractérisé en ce que les moyens de supportage comprennent une virole entourant la dalle et dont l'extrémité supérieure est ancrée à l'enceinte de béton, à la partie supérieure du puits de cuve, par des moyens d'ancrage, et un premier anneau de supportage horizontal, muni de raidisseurs verticaux soudés, et dont la périphérie interne est soudée, au cours de la fabrication, sur ladite virole, à proximité de son extrémité supérieure, et dont la périphérie externe est scellée dans l'enceinte de béton, en dessous desdits moyens d'ancrage, l'extrémité supérieure de la cuve principale étant soudée, après sa mise en place dans le puits de cuve, au premier anneau de supportage, à une distance radiale donnée de la virole périphérique de la dalle, les moyens de supportage de la cuve principale comprenant de plus un deuxième anneau de supportage horizontal, muni de raidisseurs verticaux, et dont la périphérie interne est soudée, au cours de la fabrication, sur la cuve principale, à proximité de son extrémité supérieure, et dont la périphérie externe est scellée dans l'enceinte de béton.

Lorsque le réacteur comprend de plus et de façon connue une cuve de sécurité entourant la cuve principale, cette cuve de sécurité peut être suspendue directement à la partie supérieure du puits de cuve par des moyens de supportage séparés des moyens de supportage de la cuve principale et des moyens de supportage de la dalle.

Selon un mode de réalisation préféré de l'invention, l'extrémité supérieure de la cuve de sécurité est soudée, après sa mise en place dans le puits de cuve, au deuxième anneau de supportage à une distance donnée de la cuve principale, les moyens de supportage de la cuve de sécurité comprenant de plus un troisième anneau de supportage horizontal, muni de raidisseurs verticaux, et dont la périphérie interne est soudée, au cours de la fabrication, sur la cuve de sécurité, à proximité de son extrémité supérieure, ce troisième anneau de supportage étant scellé dans l'enceinte de béton.

Selon un autre aspect de l'invention, la dalle présente une partie supérieure délimitée latéralement par une deuxième virole dont l'extrémité inférieure est fixée à ladite virole périphérique en dessous du premier anneau de supportage, par l'intermédiaire d'un anneau de liaison, lesdites viroles délimitant entre elles un espace annulaire dans lequel est logé un dispositif calorifuge, la face supérieure de la dalle se trouvant sensiblement dans le même plan horizontal que la face supérieure de l'enceinte de béton autour du puits de cuve.

Dans ce cas, la cuve principale définit avec la virole périphérique de la salle et avec l'extrémité supérieure de la cuve de sécurité deux espaces annulaires dans lesquels peuvent être logés des dispositifs calorifuges relativement étanches aux fuites de sodium et compatibles avec ce métal liquide.

On décrira maintenant, à titre d'exemple non limitatif, un mode de réalisation préféré de l'invention en se référant aux dessins annexés dans lesquels :

— la figure 1, déjà décrite, représente de façon schématique et en coupe transversale un réacteur à neutrons rapides de type intégré réalisé conformément à la technique antérieure,

— la figure 2, déjà décrite, est une vue en coupe à plus grande échelle représentant le supportage des cuves et de la dalle du réacteur selon la technique antérieure de la figure 1, et

— la figure 3 est une vue comparable à la figure 2 représentant le supportage des cuves et de la dalle d'un réacteur à neutrons rapides réalisés conformément à la présente invention.

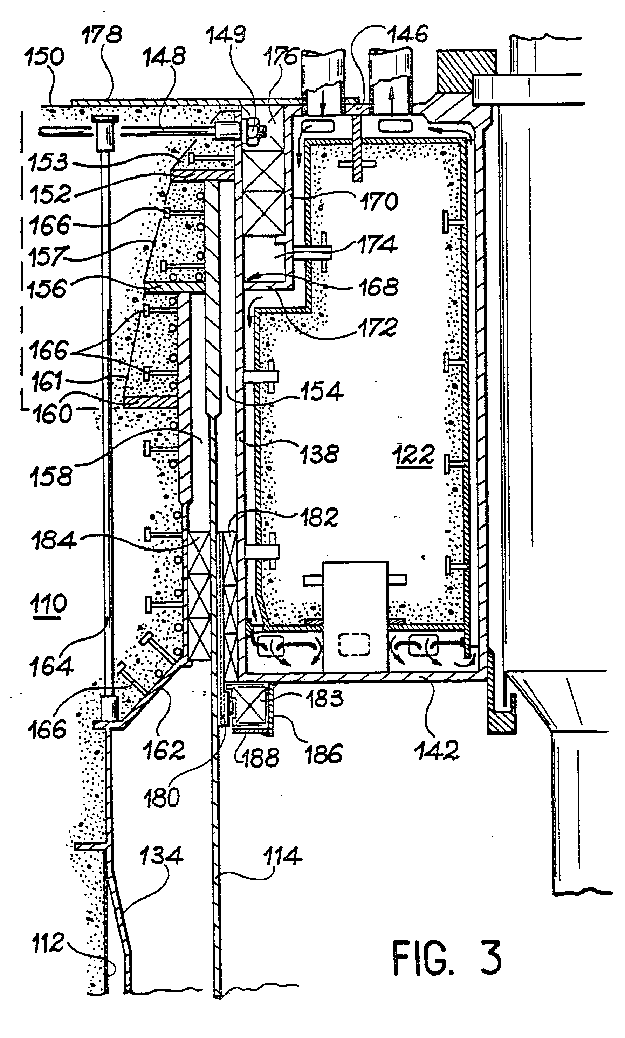

On reconnaît sur la figure 3 la partie supérieure du puits de cuve 112 formée dans l'enceinte de béton 110 pour recevoir la cuve principale 114, la cuve de sécurité 134 et la dalle de fermeture 122 de la cuve 114. Cette partie en béton est coulée après l'implantation et l'assemblage des supportages de la cuve de sécurité 134, de la cuve principale 114 et de la dalle 122.

Conformément à l'invention, la cuve principale 114, la dalle 122 et la cuve de sécurité 134 sont suspendues directement à la partie supérieure du puits de cuve 112 par des moyens de supportage séparés.

Ainsi, la virole cylindrique externe 138 de la dalle 122 est ancrée directement par son extrémité supérieure à l'enceinte de béton 110, à la partie supérieure du puits de cuve 112. Le supportage de la dalle 122 est réalisé par un anneau de supportage horizontal 152, muni de raidisseurs verticaux 153, et dont la périphérie interne est soudée sur la virole 138. La partie externe de l'anneau 152 est noyée dans le béton de l'enceinte 110. En pratique, comme le montre la figure 3, cet ancrage est complété par des tirants radiaux 148 noyés dans le béton de l'enceinte 110 et traversant la virole 138, ceux-ci étant maintenus en compression avec la virole 138 par des écrous 149. Les tirants 148 sont disposés régulièrement, par exemple tous les degrés, sur toute la périphérie de la dalle, entre la face supérieure 150 de la partie de l'enceinte 110 entourant le puits de cuve 112 et l'anneau de supportage 152.

Conformément à l'invention, la cuve principale 114 est suspendue directement à l'enceinte 110 indépendamment de la dalle 122. A cet effet, on voit sur la figure 3 que la partie supérieure cylindrique de la cuve 114, appelée « attente » de cuve, entoure la partie de la virole 138 de la dalle située en dessous de l'anneau de supportage 152. On définit ainsi entre la virole 138 et la partie supérieure de la cuve 114 un espace annulaire 154 dont les dimensions permettent d'accéder aux soudures pour d'éventuelles inspections en service.

Le bord supérieur extérieur de la cuve principale 114 est soudé, au cours du montage, sur la face inférieure de l'anneau de supportage 152. De plus, la face externe de la cuve 114 est soudée, à une certaine distance en dessous de l'anneau horizontal 152, sur un second anneau de supportage horizontal 156. Comme pour l'anneau 152, la majeure partie de l'anneau 156 est scellée dans le béton de l'enceinte 110.

La cuve de sécurité 134 est également suspendue directement à la partie supérieure du puits de cuve indépendamment de la cuve principale 114 et de la dalle 122.

A cet effet, la partie supérieure, ou attente, de la cuve 134 entoure la partie de l'attente de la cuve 114 située en dessous de l'anneau de supportage 156. Un espace annulaire 158 est ainsi formé entre les attentes des deux cuves. Comme l'espace 154, l'espace 158 présente une largeur suffisante pour permettre l'inspection des soudures.

Le bord supérieur externe de la cuve de sécurité 134 est soudé, au cours du montage, sur la face inférieure de l'anneau de supportage 156. De plus, le supportage proprement dit de la cuve de sécurité est réalisé au moyen d'un troisième anneau de supportage horizontal 160 muni de raidisseurs verticaux 161. A cet effet, le bord périphérique interne de l'anneau 160 est soudé, lors de la fabrication, sur la face externe de la partie supérieure cylindrique de la cuve 134. Comme l'illustre la figure 3, l'anneau 160 est scellé en totalité dans le béton de l'enceinte 110.

La cuve de sécurité 134 comporte, approximativement au niveau de la semelle inférieure 142 de la dalle 122, une partie tronconique 162. Cette partie est prolongée ensuite vers le bas par la paroi cylindrique de la cuve 134 proprement dite qui constitue le revêtement interne du puits de cuve 112 à la partie supérieure de celui-ci.

L'ancrage de la cuve de sécurité est réalisé au moyen de tirants verticaux 164 fixés à l'extrémité inférieure de la partie tronconique 162, dans le prolongement de la paroi cylindrique de la cuve 134. Les tirants 164 s'étendent vers le haut jusqu'à proximité de la face supérieure 150 de la partie de l'enceinte 110 entourant le puits de cuve. Ils sont noyés dans le béton de l'enceinte 110. Les tirants 164 sont répartis régulièrement sur toute la périphérie du puits de cuve et, par exemple, espacés de deux degrés.

L'ensemble constitué par les tirants radiaux 148 et par les tirants verticaux 164 permet de compenser le couple de renversement de l'ensemble des moyens de supportage des cuves et de la dalle et de solliciter à la compression le béton de l'enceinte 110.

De façon connue en soi, les ancrages de la virole 138 et des attentes des cuves 114 et 134 dans le béton de l'enceinte 110 sont complétés par un grand nombre de pattes de scellement 166 fixées sur ces différentes pièces et scellées dans le béton du puits de cuve. Comme les tirants 164, ces pattes de scellement 166 sont régulièrement réparties sur toute la périphérie du puits de cuve, par exemple tous les 2°.

Les raidisseurs verticaux 151, 153 et 161 sont soudés, respectivement, sur les anneaux de supportage 152, 156 et 160, ainsi que sur les extrémités supérieures externes de la cuve de sécurité 134, de la cuve principale 114 et de la virole de dalle 138.

Grâce à l'utilisation selon l'invention de moyens de supportage séparés pour la dalle 122 et pour la cuve principale 114, la semelle supérieure 146 de la dalle 122 peut être placée au même niveau ou éventuellement plus haut que la face supérieure 150 de la partie de l'enceinte 110 entourant le puits de cuve. En effet, une comparaison des figures 2 et 3 illustrant respectivement l'état actuel de la technique et la présente invention montre que la partie de la dalle qui fait saillie vers le bas à l'intérieur de la cuve principale dans les réacteurs existants est reportée selon l'invention à la partie supérieure de la dalle, l'épaisseur totale de la dalle 122 restant inchangée. Cette modification de la structure de la dalle est rendue possible par la suppression de la soudure de la semelle inférieure 142 de la dalle sur la cuve principale 114.

Par ailleurs, la semelle supérieure plane 146 est raccordée sur la virole externe 138, en dessous de la zone de supportage de celle-ci par l'enceinte de béton 110. Cela est justifié par la nécessité de permettre une dilatation thermique de la dalle 122 tout en minimisant les sollicitations thermiques de la virole 138.

En pratique, ce décalage en hauteur entre la semelle supérieure 146 de la dalle 122 et son point de fixation 168 sur la virole 138 est obtenu d'une façon comparable au décalage en hauteur entre la semelle inférieure 42 et son point de fixation 40 sur la cuve principale 14 selon la technique antérieure représentée sur la figure 2.

Ainsi, le bord périphérique externe de la semelle supérieure 146 est soudé au bord supérieur d'une virole 170 disposée coaxialement et à une certaine distance à l'intérieur de la virole 138. Le bord inférieur de la virole 170 est soudé au bord périphérique interne d'une couronne horizontale 172 dont le bord périphérique externe est soudé en 168 à l'intérieur de la virole 138. La couronne 172 est placée approximativement au même niveau que la couronne 156. Un espace annulaire 174, ouvert vers le haut, est ainsi formé entre les viroles 170 et 138. La largeur de cet espace est conditionnée par l'accès aux soudures et sa profondeur est fonction des contraintes thermo-mécaniques admissibles pour la virole 138. L'atmosphère présente dans l'espace 174 est la même que l'atmosphère présente dans le bâtiment réacteur (non représenté) surplombant la dalle. Généralement, cette atmosphère est de l'air.

Afin d'interdire au sodium provenant d'une fuite éventuelle sur la dalle de venir au contact de la virole de suspension 138, l'espace annulaire 174 est rempli, au moins dans sa partie supérieure, par un dispositif isolant élastique 176. Ce dispositif est comparable au dispositif 44 isolant le point de fixation 40 de la semelle inférieure 42 de la dalle dans l'état de la technique tel qu'illustré par la figure 2. Ainsi, ce dispositif 176 peut notamment être réalisé conformément aux enseignements du brevet FR-A-2 283 517 au nom du Commissariat à l'Energie Atomique. Toutefois, le dispositif 176 peut être plus rudimentaire et être constitué notamment d'un calorifuge minéral, sauf dans la partie supérieure qui doit résister aux agressions et infiltrations éventuelles de sodium liquide. Pour parfaire la protection, une plaque métallique 178 obstrue l'espace 174 en recouvrant à la fois une partie de la semelle supérieure 146 de la dalle et une partie de la face supérieure 150 de l'enceinte 110.

Grâce à la structure qui vient d'être décrite, le réceptacle formé au-dessus de la dalle par suite du décalage existant dans les solutions antérieures entre la semelle supérieure de la dalle et la face supérieure de l'enceinte de béton est supprimé. La protection contre les feux de sodium sur la dalle peut donc être allégée, voire supprimée, dans la mesure où la virole 138 supportant la dalle est protégée.

Pour un réacteur de puissance et de conception déterminée, on sait que la profondeur de la cuve principale à partir de la semelle inférieure de la dalle est bien déterminée. De plus, on a vu que l'épaisseur de la dalle reste inchangée dans cette solution par rapport à la technique antérieure.

Il en résulte que la hauteur d'un certain nombre d'éléments constitutifs du réacteur est réduite conformément à l'invention. La valeur de cette réduction correspond à la suppression du décalage existant dans les solutions antérieures entre la semelle supérieure 46 de la dalle et la face supérieure de l'enceinte de béton. Cette réduction de hauteur obtenue grâce à l'invention concerne tout d'abord le génie civil du puits de cuve, la cuve de sécurité 134 et son calorifuge (non représenté). Elle concerne également la partie des échangeurs comprise entre les brides par lesquelles ils reposent sur la face supérieure de la dalle et les axes de sortie des canalisations des circuits secondaires, ainsi que la jambe du sas de la traversée primaire de manutention et de sa rampe (non représentées).

Enfin, comparativement aux solutions antérieures, la masse du béton de protection est accrue dans la partie basse de la dalle. L'inertie thermique de cette partie de la dalle s'en trouve accrue. Les gradients thermiques axiaux sont ainsi diminués en cas d'incident de refroidissement, notamment en cas de manque de tension généralisé.

De plus, conformément à l'invention, les parties supérieures de la cuve principale et de la dalle sont, par suite du partage des charges, moins sollicitées thermiquement, en particulier au niveau de leur point d'accrochage, qui est proche de la température du puits de cuve.

Comme l'illustre la figure 3, l'espace annulaire 154 formé entre l'attente de la cuve principale 114 et la virole externe 138 de la dalle est fermé à sa base par l'association d'un calorifuge métallique 180 plaqué à la cuve et d'un dispositif isolant élastique 182 permettant d'éviter les remontées convectives du gaz neutre. Pour parfaire l'étanchéité de l'espace annulaire 154, un dispositif isolant 183, de plus grande épaisseur que le dispositif isolant 182, est disposé sous ce dernier, et maintenu contre la partie inférieure du calorifuge métallique 180 par une virole 186 soudée sur la semelle 142 de la dalle 122, et des plaques 188 soudées, après mise en place du calorifuge, sur la virole 186. Le calorifuge 180 et les dispositifs isolants élastiques 182 et 183 sont réalisés de façon connue, par exemple conformément aux enseignements des brevets FR-A-2 283 517 et FR-A-2 319 073 respectivement, au nom du Commissariat à l'Energie Atomique.

De façon comparable, l'espace 158 formé entre les parties supérieures des cuves 114 et 134 peut être fermé à sa base par un dispositif isolant élastique 184 semblable au dispositif 182.

La structure de la dalle elle-même ne fait pas l'objet de la présente invention et ne sera donc pas décrite dans la présente demande. On notera simplement que la dalle 122 telle que représentée en partie sur la figure 3 est réalisée de préférence conformément aux enseignements de la demande de brevet européen EP-A1 0 055 643 au nom du Commissariat à l'Energie Atomique. Toutefois, toute autre structure pourrait être envisagée sans sortir du cadre de l'invention.

Conformément à l'invention, les ensembles constitués par la cuve principale 114 et son anneau de supportage 156 muni des raidisseurs 157, la dalle 122 et son anneau de supportage 152, muni des raidisseurs 153, et la partie supérieure de la cuve de sécurité 134 et son anneau de supportage 160, muni des raidisseurs 161, peuvent être confectionnés entièrement en atelier sur le site du réacteur lors de la construction de celui-ci. Par rapport aux solutions antérieures, on supprime ainsi l'opération délicate de la soudure homogène entre la cuve principale et l'attente de cuve effectuée à l'intérieur du bloc réacteur. De plus, la présence de l'anneau de supportage facilite la manutention de la cuve.

## Revendications

1. Réacteur nucléaire à neutrons rapides comprenant une cuve principale (114) remplie de métal liquide et contenant le cœur (16) du réacteur, une dalle (122) de fermeture obturant la cuve (114) et une enceinte de béton (110) définissant un puits de cuve (112) dans lequel sont logées et suspendues la cuve principale (114) et sa dalle (122) de fermeture, la dalle (122) et la cuve principale (114) étant suspendues directement à la partie supérieure du puits de cuve par des moyens de supportage (138, 148, 152, 156), caractérisé en ce que les moyens de supportage comprennent une virole (138) entourant la dalle et dont l'extrémité supérieure est ancrée à l'enceinte de béton (110) à la partie supérieure du puits de cuve, par des moyens d'ancrage (148), et un premier anneau de supportage (152) horizontal, muni de raidisseurs verticaux (153) et dont la périphérie interne est soudée, au cours de la fabrication, sur ladite virole (138) à proximité de son extrémité supérieure, et dont la périphérie externe est scellée dans l'enceinte de béton (110), en dessous desdits moyens d'ancrage (148), l'extrémité supérieure de la cuve principale (114) étant soudée, après sa mise en place dans le puits de cuve, au premier anneau de supportage (152) à une distance radiale donnée de la virole périphérique (138) de la dalle (122), les moyens de supportage de la cuve principale (114) comprenant de plus un deuxième anneau de supportage (156) horizontal, muni de raidisseurs verticaux (157), et dont la périphérie interne est soudée, au cours de la fabrication, sur la cuve principale (114), à proximité de son extrémité supérieure, et dont la périphérie externe est scellée dans l'enceinte de béton (110).

2. Réacteur nucléaire selon la revendication 1, caractérisé en ce qu'il comprend de plus une cuve de sécurité (134) entourant la cuve principale (114) et suspendue directement à la partie supérieure du puits de cuve (112) par des moyens de supportage (156, 164) de la dalle (122).

3. Réacteur nucléaire selon la revendication 2, caractérisé en ce que l'extrémité supérieure de la cuve de sécurité (134) est soudée, après sa mise en place dans le puits de cuve, au deuxième anneau de supportage (156), à une distance donnée de la cuve principale (114), les moyens de supportage de la cuve de sécurité (134) comprenant de plus un troisième anneau de supportage (160) horizontal, muni de raidisseurs verticaux (161), et dont la périphérie interne est soudée, au cours de la fabrication, sur la cuve de sécurité (134), à proximité de son extrémité supérieure, ce troisième anneau de supportage (160) étant scellé dans l'enceinte de béton (110).

4. Réacteur nucléaire selon l'une quelconque des revendications 1 et 3, caractérisé en ce que la dalle (122) présente une partie supérieure délimitée latéralement par une deuxième virole (170) dont l'extrémité inférieure est fixée à ladite virole périphérique (138) en dessous du premier anneau de supportage (152), par l'intermédiaire d'un anneau de liaison (172), lesdites viroles délimitant entre elles un espace annulaire (174) dans lequel est logé un dispositif calorifuge (176) et la face supérieure de la dalle se trouvant sensiblement dans le même plan horizontal que la face supérieure de l'enceinte de béton (110) autour du puits de cuve (112).

5. Réacteur nucléaire selon la revendication 3, caractérisé en ce que la cuve principale (114) définit avec la virole périphérique (138) de la dalle (122) et avec l'extrémité supérieure de la cuve de sécurité (134) deux espaces annulaires (154, 158) dans lesquels sont logés des dispositifs calorifuges (182, 184).

6. Réacteur nucléaire selon la revendication 5, caractérisé en ce que l'espace annulaire (154) est fermé, en dessous de la semelle inférieure (142) de la dalle (122), par un dispositif calorifuge (183) maintenu en place au moyen d'une virole (186) soudée sur la semelle (142), et de plaques (188) soudées sur la virole (186).

## Claims

1. Fast neutron nuclear reactor comprising a liquid metal-filled main vessel (114) containing the reactor core (16), a sealing slab (122) which seals the vessel (114) and a concrete enclosure (110) defining a vessel shaft (112) in which are located and suspended the main vessel (114) and its sealing slab (122), the slab (122) and the main vessel (114) being directly suspended on the upper part of the vessel shaft by supporting means (138, 148, 152, 156), characterized in that the supporting means comprise a ferrule (138) surrounding the slab, whose upper end is anchored in the concrete enclosure (110) in the upper part of the vessel well by anchoring means (148), a first horizontal support ring (152), provided with welded vertical stiffeners (153) and whose inner periphery is welded, during production, in the vicinity of the upper end of the ferrule (138) and whose outer periphery is sealed in the concrete enclosure (110) below the anchoring means (146), the upper end of the main vessel (114) being welded, following its installation in the vessel shaft, to the first support ring (152) at a given radial distance from the peripheral ferrule (138) of the slab (122), the supporting means for the main vessel (114) also comprising a second horizontal support ring (156) provided with vertical stiffeners (157) and whose inner periphery is welded, during production, in the vicinity of the upper end of the main vessel (114) and whose outer periphery is sealed in the concrete enclosure (110).

2. Nuclear reactor according to claim 1, characterized in that it also comprises a safety vessel (134) surrounding the main vessel (114) and directly suspended on the upper part of the vessel shaft (112) by means (156, 164) for supporting the slab (122).

3. Nuclear reactor according to claim 2, characterized in that the upper end of the safety vessel (134) is welded, following installation in the vessel shaft, to the second support ring (156) at a given distance from the main vessel (114), the supporting means for the safety vessel (134) also comprising a third horizontal support ring (160), provided with vertical stiffeners (161) and whose inner periphery is welded, during manufacture, to the safety vessel (134), in the vicinity of its upper end, said third support ring (160) being sealed in the concrete enclosure (110).

4. Nuclear reactor according to either of the claims 1 and 3, characterized in that the slab (122) has an upper portion laterally defined by a second ferrule (170), whose lower end is fixed to the peripheral ferrule (138) below the first support ring (152), by means of a connecting ring (172), said ferrules defining between them an annular space (174) housing a thermal insulating means (176), the upper face of the slab being substantially located in the same horizontal plane as the upper face of the concrete enclosure (110) around the vessel shaft (112).

5. Nuclear reactor according to claim 3, characterized in that the main vessel (114) defines with the peripheral ferrule (138) of the slab (122) and with the upper end of the safety vessel (134), two annular spaces (154, 158) housing thermal insulation means (182, 184).

6. Nuclear reactor according to claim 5, characterized in that the annular space (154) is closed, below the lower base plate (142) of the slab (122), by a thermal insulation means (183) held in place by a ferrule (186) welded to the base plate (142) and plates (188) welded to the ferrule (186).

**Patentansprüche**

1. Schneller Kernreaktor mit einem Hauptbehälter (114), der mit Flüssigmetall gefüllt ist und den Reaktorkern (16) enthält, einem den Behälter (114) verschließenden Abschlußdeckel (122) und einer Betonumhüllung (110), welche einen Behältertrog (112) begrenzt, in dem der Hauptbethälter (114) und sein Abschlußdeckel (122) untergebracht und aufgehängt sind, wobei der Deckel (122) und der Hauptbehälter (114) unmittelbar an dem oberen Abschnitt des Behältertrogs durch Halterungsmittel (138, 148, 152, 156) aufgehängt sind, dadurch gekennzeichnet, daß die Halterungsmittel einen Mantel (138), der den Deckel umgibt und dessen oberes Ende an der Betonumhüllung (110) am oberen Abschnitt des Behältertrogs durch Verankerungsmittel (148) verankert ist, und einen ersten, horizontalen Halterungsring (152) umfassen, der mit vertikalen Aussteifungen (153) ausgerüstet ist und dessen innerer Umfang bei Zusammenbau an den genannten Mantel (138) in der Nähe seines oberen Endes angeschweißt wird und dessen äußerer Umfang in die Betonumhüllung (110) unterhalb der genannten Verankerungsmittel (148) eingegossen wird, wobei das obere Ende des Hauptbehälters (114), nachdem er in dem Behältertrog in seine Lage gebracht worden ist, an dem ersten Halterungsring (152) mit einem vorgegebenen, radialen Abstand von dem Umfangsmantel (138) des Deckels (122) angeschweißt wird und die Halterungsmittel des Hauptbehälters (114), ferner einen zweiten, horizontalen Halterungsring (156) aufweisen, der mit vertikalen Aussteifungen (157) ausgerüstet ist und dessen innerer Umfang während des Zusammenbaus an dem Hauptbehälter (114) in der Nähe seines oberen Endes angeschweißt wird und dessen äußerer Umfang in die Betonumhüllung (110) eingegossen wird.

2. Kernreaktor nach Anspruch 1, dadurch gekennzeichnet, daß er ferner einen Sicherheitsbehälter (134) aufweist, der den Hauptbehälter (114) umgibt und unmittelbar an dem oberen Abschnitt des Behältertrogs (112) durch Halterungsmittel (156, 164) des Deckels (122) gehaltert ist.

3. Kernreaktor nach Anspruch 2, dadurch gekennzeichnet, daß das obere Ende des Sicherheitsbehälters (134), nachdem er in seiner Lage in dem Behältertrog angeordnet worden ist, an einem zweiten Halterungsring (156) mit einem vorgegebenen Abstand von dem Hauptbehälter (114) angeschweißt wird, wobei die Halterungsmittel des Sicherheitsbehälters (134) ferner einen dritten, horizontalen Halterungsring (160) aufweisen, der mit vertikalen Aussteifungen (161) ausgerüstet ist und dessen innerer Umfang während der Herstellung an den Sicherheitsbehälter (134) in der Nähe seines oberen Endes angeschweißt wird und wobei dieser dritte Halterungsring (160) in die Betonumhüllung (110) eingegossen wird.

4. Kernreaktor nach irgendeinem der Ansprüche 1 bis 3, dadurch gekennzeichnet, daß der Deckel (122) einen oberen Abschnitt aufweist, der seitlich von einem zweiten Mantel (170) begrenzt ist, dessen unteres Ende an dem genannten Umfangsmantel (138) unterhalb des ersten Halterungsrings (152) mittels eines Verbindungsrings (172) befestigt ist, wobei die genannten Mäntel zwischen sich einen Ringraum (174) begrenzen, in dem eine Wärmedämmeinrichtung (176) untergebracht ist, und sich die Oberseite des Deckels im wesentlichen in derselben horizontalen Ebene wie die Oberseite der Betonumhüllung (110) um den Behältertrog (112) herum befindet.

5. Kernreaktor nach Anspruch 3, dadurch gekennzeichnet, daß der Hauptbehälter (114) mit dem Umfangsmantel (138) des Deckels (122) und mit dem oberen Ende des Sicherheitsbehälters (134) zwei Ringräume (154, 158) begrenzt, in denen Wärmedämmeinrichtungen (182, 184) untergebracht sind.

6. Kernreaktor nach Anspruch 5, dadurch gekennzeichnet, daß der Ringraum (154) unterhalb der unteren Fußplatte (142) des Deckels (122) mit einer Wärmedämmeinrichtung (183) verschlossen ist, die mittels eines an die Fußplatte (142) angeschweißten Rings (186) und an den Ring (186) angeschweißte Platten (188) in ihrer Lage gehalten wird.

FIG. 1

FIG. 2

FIG. 3